(19) Europäisches Patentamt
European Patent Office
Office européen des brevets

(11) Publication number: **0 158 744**
**A1**

# (12) EUROPEAN PATENT APPLICATION

(21) Application number: **84200546.4**

(22) Date of filing: **17.04.84**

(51) Int. Cl.[4]: **C 01 B 17/74**
C 09 K 5/00

(43) Date of publication of application:
**23.10.85 Bulletin 85/43**

(84) Designated Contracting States:
**BE DE FR GB IT LU NL**

(71) Applicant: **EUROPEAN ATOMIC ENERGY COMMUNITY (EURATOM)**
**Batiment Jean Monnet Plateau du Kirchberg Boîte Postale 1907**
**Luxembourg(LU)**

(72) Inventor: **Broggi, Armando**
**Biale Aguggiari No. 22**
**I-21100 Varese(IT)**

(72) Inventor: **Bilgen, Ertugrul**
**102 Bathurst Avenue**
**Pointe Claire, H9S 4Z8(CA)**

(72) Inventor: **Caretta, Alberto**
**Via Mazzini, 11**
**I-28041 Arona(IT)**

(74) Representative: **Urbanus, Henricus Maria, Ir. et al,**
**c/o Vereenigde Octrooibureaux Nieuwe Parklaan 107**
**NL-2587 BP 's-Gravenhage(NL)**

## (54) Process for storing thermal energy and process for liberating mechanical energy.

(57) The invention relates to a process for temporary storing of thermal energy on an industrial scale. In a first plant $SO_3$ is catalytically cracked to form $SO_2$ and oxygen, which can be stored as respectively liquid $SO_2$ and compressed $O_2$. By suitable internal heat exchange the storing can take place with a high yield.

In a second plant the $SO_2$ and $O_2$ are recombined to form $SO_3$ which may again be stored. By catalytic combustion at a high temperature and pressure, followed by adiabatic expansion in a turbine, mechanical energy is liberated and if desired immediately converted into electrical energy. By use of appropriate heat exchange here too the yield can be high.

As a rule the two plants will be operated at different times and or at different places.

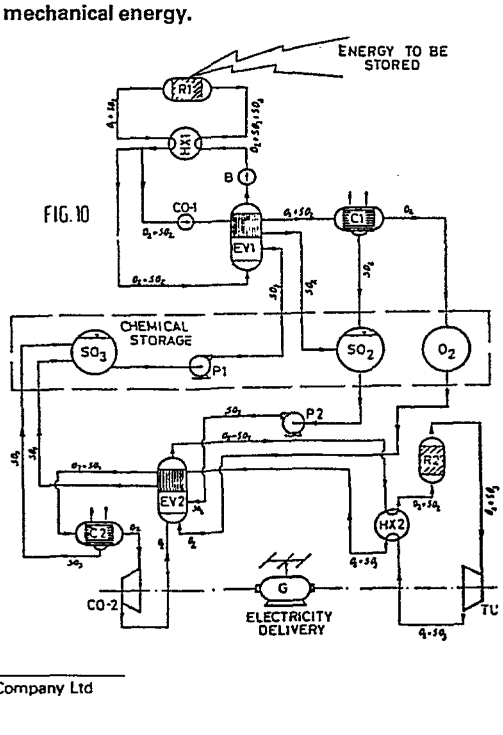

FIG. 10

EP 0 158 744 A1

Process for storing thermal energy and process for liberating mechanical energy.

The invention is related to a process for storing thermal energy by decomposition of a chemical compound and storing the decomposition products. The invention is also related to a process for liberating the stored thermal energy in the form of mechanical energy in which the originally decomposed compound is formed back.

Both steps of the process can be carried out separately at different times and if desired at different locations.

Obviously this mechanical energy can then be converted into electrical energy in a customary way.

Such processes are valuable in cases where thermal energy is available in large quantities and at a sufficiently high temperature either continuously or over only a part of the day and in which there is a demand for either mechanical or electrical power in similar quantities over a different part of the day.

This happens for example in nuclear plants, which operate cheapest when they work day and night, in applications of solar energy, which of course is only available in daylight, and in periods in which electrical power can be obtained cheaply at a time when there is not a sufficient demand for it. Such electrical energy can then be converted into cheap thermal energy at a suitable temperature and stored according to the invention. This is e.g. the case in tidal power plants.

I. 1 Cracking of $SO_3$

According to the invention the thermal energy is stored by a process in which stored sulphur trioxide is evaporated and preheated to a high temperature under an elevated pressure and fed to a catalytic cracking reactor, the gas in this cracking reactor is heated using heat from an outside source, the cracked gases so obtained are

cooled and separated in their components by stepwise cooling and compression in which sulphur dioxide is condensed and sent to storage and the remaining oxygen is compressed and sent to storage, all the heat required for evaporating and preheating being obtained by heat exchange with the cracked gases and any compression energy being taken from an outside source.

The reaction which occurs in the catalytic reactor is the equilibrium

$$2\ SO_3 \rightleftharpoons 2\ SO_2 + O_2$$

As far as known this reaction has not been proposed before for use in energy storage.

At high pressure and relatively low temperature this equilibrium shifts to the left and at relatively high temperature and low pressure it is shifted to the right. In order to obtain a sufficiently fast rate of reaction this reaction should be performed in the presence of a catalyst.

Naturally, in order to reduce corrosion by $SO_2$, $SO_3$ and $O_2$ as far as possible the presence of water in the system should be excluded as far as possible. It is well known, that $SO_3$ and water will reach to form the highly corrosive suphuric acid. Likewise it is known that $SO_2$ and $O_2$ in a perfectly dry condition will scarcely attack iron or steel. In the presence of water however, such mixtures are very corrosive.

The starting material is preferably stored as liquid sulphur trioxide (m.p. 16,8$^{o}$C) and the decomposition products are preferably stored as liquid sulphur dioxide at about 6 bars and as gaseous oxygen at about 40-60 bars.

Catalysts for this reaction have been elaborately studied in connection with the manufacture of $SO_3$ as an intermediary for $H_2SO_4$. Especially it was well known that iron oxide catalysts are quite effective at high temperatures, but at such temperatures the

equilibrium mixture contains only a moderate amount of $SO_3$. For the present process such simple iron oxide catalysts are quite satisfactory. These are cheap and relatively insensitive to impurities.

Preferably such simple iron oxide catalysts are used in the process of the invention and they are suitably operated at about 900°C or above and at 2-10 bar for the cracking reaction.

Because both the raw material and the final product of the process are energy, particular attention should be paid to the heat recovery inside the plant. Looking at this argument the aspect of our process which is the most interesting: the employment of the condensation heat of sulphur dioxide to evaporate the corresponding amount of sulphur trioxide. Because of the differences between the liquid-vapour curves (see Fig.1) of the two substances, the correct matching can be reached only by increasing the pressure of sulphur dioxide; preferably the sulphur dioxide is condensed at a temperature somewhat higher than the evaporation temperature of sulphur trioxide under process conditions and pressure; in this way the $SO_2$ can be separated from oxygen and all the energy employed for the gas compression is also used for the evaporation of sulphur trioxide. The available energy from these two points is not enough and the part still required is taken from the sensible heat of the gaseous mixture leaving the cracking reactor. At the same time, a convenient temperature gradient for the main heat exchanger is created. For this purpose a gaseous carrier stream, mainly consisting of oxygen and sulphur dioxide is circulated through the evaporator for sulphur trioxide, the various heat exchangers, the cracking reactor, at least part of the cooling exchangers and back to the evaporator.

Figure 2 shows the conceptual scheme conceived for this process. Energy to be stored is used in the chemical reactor R, in which in a practically isothermal way $SO_3$ is decomposed into $SO_2$ and $O_2$. The

temperature is in the order of 900°C at a pressure around 6 bar. The gaseous mixture is cooled down to about 150°C in the heat exchanger HX and the energy released is used to preheat the reacting mixture.

Gases leaving the HX are divided into two practically equal streams. One is compressed and goes to the evaporator EV in which it is cooled down by the evaporating liquid and the other enters the bottom of the same apparatus, constituting the carrier stream of the evaporating liquid sulphur trioxide. The gaseous mixture leaving the top of the heat exchanger of EV (the $SO_3$ evaporator) containing some $SO_2$, is cooled down to ambient temperature in the condenser CD, from which liquid $SO_2$ goes to storage and oxygen with a small residual amount of $SO_2$ is compressed and also goes to storage. The gaseous mixture, leaving the top of evaporator EV is preheated in the heat exchanger HX and enters the chemical reactor R, closing the loop. The circulation energy is furnished by the blower B, whose energy consumption is in the order of 3°/oo of the nominal plant power.

I. 2 Basic considerations

Figure 3 shows a set of curves representing the equilibrium composition of a mixture leaving the isothermal sulphur trioxide cracking reactor, as a function of the reactor temperature for a series of pressure values.

The working pressure must be low enough to allow a good splitting and high enough to minimize the size and relative investment cost of the loop. This is a typical compromise parameter that must be balanced for a given source temperature.

For a given production, the useful input energy is given by the following relations:

$$\Delta H_O=\Delta H_R+\Delta H_{EV}SO_3-\Delta H_{CD}SO_2 \qquad (1)$$

$\Delta H_R$ = reaction heat
$\Delta H_{EV}$ = evaporation heat
$\Delta H_{CD}$ = condensation heat

in which the three terms are evaluated at ambient temperature (30°C). As one can see this value corresponds to the net enthalpy evolution of the chemical products, ignoring the compression work for oxygen because the enthalpic drop is practically 100% removed.

Obviously, the reaction enthalpy is referred to gaseous chemicals at 30°C; this is necessary because the amount of liquid products entering or leaving the plant can be different from the stoichiometry of the reaction. This is the case with sulphur dioxide, only 95% of which is liquefied, while the remainder is compressed together with the oxygen.

The difference between the total input energy $\Delta E_i$ and the theoretical $\Delta H_o$ gives the plant efficiency and also the driving force for the optimisation of the plant operating conditions. This can be clearly understood by considering the other expression of the input energy $\Delta E_i$, which must be equal to:

$$\Delta E_i = \Delta H_H+W_C = \Delta H_O+\Delta H_W \qquad (2)$$

in which $\Delta H_H$ is the input energy in the chemical reactor, $W_C$ corresponds to the compression work, and $\Delta H_W$ means the total waste heat.
The complete expression of $\Delta H_H$ is:

$$\Delta H_H = \Delta H_O-W_C + \Delta H_W \qquad (3)$$

Even if $\Delta H_H$ is decreased by increasing $W_C$ (higher separation pressure), this does not decrease $\Delta E_i$, but the positive effect must be seen in the separation efficiency and the corresponding lowering of $\Delta H_W$. This positive effect must be balanced with the

increase in investment, both for the rotating machines and for the pressure containers.

There is also a negative effect in increasing the separation pressure: as $W_C$ increases there is a corresponding lowering of $\Delta H_H$; this is possible only by decreasing the contribution to the sulphur trioxide evaporation introduced as sensible heat by the carrier; this fact must be considered as decreasing the average $\Delta T$ of the main heat exchanger HX and increasing its investment cost.

Values presented in our set of operating conditions are a good compromise between the convenience of increasing the process efficiency and the need to keep the investment cost low. These results correspond to a preliminary optimisation and can therefore be adjusted at any time.

I. 3 Process description

The flow-sheet of an example of the plant is presented in Fig. 4. The carrier loop is represented by double lines. Its pressure is 6.5 bar. A gaseous mixture containing more than 48% by volume of $SO_3$ and the rest consisting of $SO_2$ and $O_2$ at a ratio of 2:1, preheated to 850°C, enters the reactor R as stream 29. In this apparatus, in a nearly isothermal way, in the presence of a catalyst, sulphur trioxide is decomposed into sulphur dioxide and oxygen; the temperature is increased to 900°C and the mixture is assumed to reach 95% of the equilibrium composition at that temperature. Experience indicates that catalysis for this reaction at this temperature is a very simple problem which can be solved by employing some kind of inexpensive iron oxide. The reactor design and its mechanical configuration depend strongly upon the quality of the energy to be stored (heat or electricity) and will change considerably if we pass from a nuclear to a solar source; this aspect must be solved for the particular case of application.

The reacted mixture leaves the reactor R as stream 1, containing about 23% by volume of $SO_3$, and goes to the heat exchanger HX 1 in which it is cooled down in a counter current with the reacting mixture of stream 29; the outlet temperature is about 150°C; at this point stream 2 is divided into a carrier stream 3 and a stream 4.

According to the invention, this stream 4 after splitting off the carrier stream 3, are cooled to condense unconverted sulphur trioxide and it is stepwise compressed and cooled in heat exchange with the carrier stream and evaporating sulphur trioxide while condensing sulphur dioxide.

Probably, the splitting off of the carrier stream is so regulated that the remaining gases (stream 4) contain an amount of $SO_2$ and $O_2$ equivalent to the amount of $SO_3$ which has been decomposed and the latter stream 4 is passed to the separation steps of $SO_2$ and $O_2$.

Stream 4 enters the heat exchanger HX2, where it is cooled to 75°C and leaves the HX2 as stream 5; this stream enters the condenser C1 in which most of the unconverted sulphur trioxide is condensed at a final temperature of 30°C; part of the available heat is used to preheat the liquid $SO_3$ in stream 25; the gaseous mixture leaves C1 at 30°C as stream 7 and is compressed by the compressor CO-1 to stream 8 at 25 bar and 168°C; this stream enters the heat exchanger EU1 of the sulphur trioxide evaporator EV; the mixture is cooled down by the evaporating liquid to the dew-point of $SO_3$ (about 74°C); a small amount of $SO_2$ is condensed and leaves the apparatus in stream 9 at 73°C; gases leave the heat exchanger in stream 10 at 73°C and go to the compressor CO2, stream 11 at 35 bar and 108°C enters the heat exchanger EU2 of evaporator EV; here it is cooled down to 73°C and most of the $SO_2$ and some $SO_3$ condense and are discharged as stream

12; the gaseous stream 13 enters the compressor CO3, where its pressure is raised to 60 bar at 133°C, and it flows to heat exchanger EU 3 of evaporator EV as stream 14; in this apparatus it is again cooled down to 73°C; some $SO_2$ and part of the $SO_3$ condense and leave as stream 15; the gaseous mixture (stream 17) goes to the condenser C2 in which it is cooled down to 35°C; stream 19 is composed of all the oxygen and the residual $SO_2$ (about 10% by volume); it goes to the storage tank T A3.
All the $SO_3$ contained in stream 17 and most of the $SO_2$ condense (stream 18) and go to the storage TA2; available energy is used to preheat the $SO_3$.

Liquid $SO_2$ with all the $SO_3$ corresponding to stream 7, leaving heat exchangers EU1, 2, 3 as stream 9, 12 and 15, at 73°C are used to preheat liquid $SO_3$ contained in stream 23; stream 16 at 35°C goes to the storage tank TA2 in which $SO_2$ with about 13% by weight $SO_3$ is stored. Preheated streams of liquid $SO_3$ (22, 24, 26) go to the evaporator EV in which they pass into the vapour phase (at 70°C) as stream 27; all the energy transferred by heat exchangers EU1, EU2 and EU3 is not enough to evaporate the required amount of sulphur trioxide; the heat still necessary is taken from the sensible heat of the carrier (stream 3) entering at about 150°C and leaving EV at 70°C as stream 27. This gaseous stream goes to the heat exchanger HX2 via the blower B, coming out at about 100°C and going to the main heat recuperator HX1 which it leaves at 850°C, going to the reactor R and closing the loop.

From the practical point of view, the main heat exchanger HX1 will be mechanically designed in such a way as to constitute the external region of reactor R (streams 29 and 1) and externally surrounded by the low temperature streams 28 and 2. Following this configuration, thermal losses will be minimized and only

this part of the plant must be attached to the primary energy source to be stored; the remaining part of the plant, working at rather low temperature, can be placed as far away as necessary; the link will be assured by streams 2 and 28 at 150 and 100°C, respectively. As the low temperature part of the plant is extremely small it can accept any type of mechanical solution and containment (even underground).

It is possible that, for practical reasons, the evaporator EV may be split into 3 different pieces of apparatus, working in parallel, each one corresponding to the power of EV1, EV2 and EV3, respectively. Obviously streams 3, 22, 24 and 26 must then also be split proportionally. Pressure losses will be very small because of the reduced number of pieces of apparatus constituting the main loop; in any case they will be compensated by the blower B.

The process description already given corresponds to the steady-state situation at full power. When the available power is less than the nominal one, the first action of the control is an adaptation of the inlet mixture composition ($SO_3$ present in stream 29), in order to keep the outlet composition of stream 1 and its temperature constant. The subdivision of stream 2 into streams 3 and 4 will be such that the amount of $SO_2$ and $O_2$ of stream 4 corresponds to the amount of $SO_3$ decomposed; at the same time, the by-pass of the evaporator EV (stream 3' and valve V4) will be partially open in such a way as to reduce stream 3 proportionally to the power reduction (at zero power stream 3 must be equal to zero). When the inlet composition of stream 29 reaches that corresponding to stream 1, the plant power corresponds to zero. If this situation is maintained for a longer period, the thermal losses (even if very small) will act to decrease the reactor temperature. If this is true, because the composition

of the reacting mixture is thermodynamically in equilibrium, the only thermodynamic possibility for the reactor is to recombine $SO_2$, and $O_2$ giving $SO_3$. As this reaction is exothermic, the heat so produced will be released to compensate the thermal losses, keeping the temperatures always constant. The composition of stream 29 will be regulated by adding $SO_2$ and $O_2$ from the storage tanks TA2 and TA3, via stream 30 and 31; stream 3 will then be equal to zero; stream 4 will be regulated in such a way as to eliminate the excess of $SO_3$ via condenser C1; the difference between stream 2 and 4 will be by-passed as stream 3' via valve V4; valve V1 will be open in order to put stream 7 into the line 27 (the remaining part of the plant being stopped). In this way, the plant can remain for either a short or a long period waiting for some input energy to be stored (the length of this period is of course limited by the storage volumes; the consumption rate will be identical to the thermal losses).

I. 4 Mass and enthalpy balances

The complete mass balance of the plant, corresponding to the decomposition of 1 mol of $SO_3$ is given in Table I. Physical phase, pressure, temperature and enthalpies are also given for each stream identified in the flow-sheet of Fig. 4. From these elements, all apparatus power and real mass or volume flows, for a given plant capacity, can be evaluated. This exercise will be performed in section IV, for some specific applications.

The main characteristics of heat exchangers are presented in Table II, in which the physical phase of fluids, their temperature drops, average temperature drop, working pressure and exchanged power are given. The heat transfer coefficient can be evaluated from the chemical composition given in Table I and from all

this information the required heat exchanging areas can be estimated and also the relative investment cost. Another useful piece of information allowing judgement of the simplicity of the plant is constituted by the partial values of the different heat exchangers and the ratio between the total exchanged power and the nominal thermal power of the plant. Average temperature drops across the wall were fixed taking into account the expected overall heat transfer coefficient for the fluids involved in the operation. Fig. 5 represents the mass flow of the process. In this scheme it is easy to identify the ratio between reactants and carrier, reactor and separation efficiencies and also the operating principle and simplicity of the process.

I. 5 Process efficiency

The enthalpy analysis of the process is presented in Table III. Starting from the apparatus power, evaluated from the enthalpy balance presented in Table I, the overall process efficiency of the plant is evaluated. This is given as the ratio between the net increase in internal energy of the chemicals involved and all the energy entering the plant. Clearly, the method of evaluating the process efficiency is different for each case of input energy (heat or electricity), as will be shown in the next sections. Two elements were not taken into account: blower power and thermal losses, because the absolute value for both is in the order of magnitude of the evaluation error. They will be considered when the mechanical design is available.

II. Oxidation plant.

II.1 Principle

In the above it has been disclosed how thermal energy can be stored in the form of liquid $SO_2$ and compressed $O_2$. The next problem then is how these chemicals can be used to liberate mechanical energy

in an efficient way.

According to the invention the mechanical energy can be liberated by burning a stored fuel at a relatively high temperature using stored oxygen and the process is characterised in that stored liquid sulphur dioxide is evaporated, mixed with stored oxygen, the mixture is preheated to an elevated temperature, introduced into a catalytic reactor and at least partially converted into sulphur trioxide with rise of temperature, the reaction gases are expanded in a turbine, producing the desired mechanical energy, the expanded gases are cooled, the sulphur trioxide formed is condensed and sent to storage and the unconverted sulphur dioxide and oxygen are recycled, all the heat required for evaporation of sulphur dioxide and for preheating the gases being supplied by heat exchange with the expanded gases.

Just as in the cracking plant the catalyst used may be a simple iron oxide catalyst. In this case this catalyst is operated at a higher pressure and at a lower temperature than in the cracking plant so that in each case a suitable composition of the equilibrium mixture is obtained. A suitable pressure is 0-60 bars. Preferably the catalytic reactor is operated at an inlet temperature of 400-500$^{o}$C and an outlet temperature of at least 700$^{o}$C and at a pressure of 20-40 bars.

In order to remove the corrosion of the iron or steel apparatus by the sulphur compounds, the entire process is preferably carried out in the practical absence of water.

In order to make the best use of the heat of condensation of the $SO_3$ the sulphur dioxide is evaporated in a carrier stream, mainly consisting of sulphur dioxide and oxygen and in heat exchange with expanded combustion gases containing condensing sulphur

trioxide. This heat of condensation is then fully used to evaporate the fresh sulphur dioxide.

Figure 6 shows a conceptual scheme of the plant. The reactor R is employed for the recombination of $SO_2$ and $O_2$ giving $SO_3$, adiabatically. Hot gases go to the turbine TU in which they are expanded producing useful work; from this machine they go to the heat exchanger HX1 in which they are cooled by the mixture to be reacted; at low temperature they enter the heat exchanger of the $SO_2$-evaporator EV, and the produced sulphur trioxide is separated by condensation and goes to the storage vessel; the available condensation heat is used to evaporate sulphur dioxide arriving from its storage tank; the carrier leaving the heat exchanger is cooled in CD, releasing waste heat, and it is compressed by compressor CO and then enters the evaporator EV, in which more oxygen is added. Following this procedure, sulphur dioxide is evaporated at a low temperature corresponding to its partial pressure in the reacting mixture and not at that corresponding to the total pressure of the plant, as in a normal boiler. The carrier charged with the reactants, leaving the top of EV, is preheated in HX1 and then enters the adiabatic reactor R, closing the loop. Electricity is available from the generator G, as the difference between the turbine work and that consumed by the compressor.

The loop is completely closed avoiding the delivering of any agent to the outside world and at the same time the need for intense and expensive purification chains.

II.2 <u>Basic considerations</u>

By looking at Fig. 7, one can see that reactor R1 works at 80% of its conversion capacity and R2 at 95%. It is well known that these adiabatic reactors can work with very simple iron oxide catalysts,

avoiding all the complexity of internal interbed heat exchangers. Working pressure and temperatures were fixed by taking into account the present possibilities of gas turbines and compressors. The situation is such that a further optimisation can be envisaged.

II.3 Process description

In Fig. 8 the flow sheet of the plant is presented. All streams are represented by numbers which change when the temperature, pressure or chemical composition change.

We can start the description with stream 43 which contains the reacting mixture at 440°C and 40 bar; it enters the adiabatic reactor R1 in which $SO_2$ recombines with $O_2$ producing $SO_3$; hot gases at 777°C leaving the reactor R1 as stream 1, go to the turbine RU1 in which they are expanded to 10 bar producing useful work; the temperature drops to about 486°C in stream 2; it is subdivided into streams 3 and 4; the second enters the heat recuperator HX1 where it is cooled to 72°C (dew point of sulphur trioxide), coming out as stream 5; this stream enters the heat exchanger of EV2 in which it is cooled down to 64°C; some $SO_3$ condenses and goes to the storage tank TA1 as stream 33; condensing heat is used to evaporate sulphur dioxide arriving from the storage tank TA2 as stream 28; one half of the required oxygen is also added in EV2 entering as stream 32; the working conditions of EV2 are 60°C and 40 bar; stream 6 coming out from EV2 enters the condenser C2 in which it is cooled to 30°C. The corresponding amount of sulphur trioxide is condensed and leaves as stream 34, going to the storage tank TA1. A carrier stream 7 leaving condenser C2 goes to the $SO_2$ evaporator EV1; the same apparatus receives $SO_2$ as stream 29 and oxygen as stream 31; the working conditions are 35°C and 10

bar; the carrier enriched in $SO_2$ and $O_2$ leaves EV1 from the top as stream 8 and goes to the heat exchanger of C2, taking part of the heat released by the condensing $SO_3$; its temperature increases up to 60°C; from this apparatus, stream 9 goes to heat exchanger HX1, in which its temperature reaches 415°C; at this point, together with stream 3 to 486°C, as stream 20 it enters the adiabatic reactor R2 in which more $SO_3$ is produced and the gases are heated by the reaction heat. The outlet temperature of the gas leaving the adiabatic reactor as stream 11 is 757°C; in these conditions it enters the turbine TU2 where it is expanded to 2.5 bar; the temperature of stream 12 is 474°C; this relatively hot stream goes to the heat exchanger HX2 where it is cooled down by the reacting mixture of stream 42; stream 13 leaves the heat exchanger at 185°C and enters the heat exchanger of the sulphur trioxide evaporator EV4 where it is cooled down to 113°C by the evaporating liquid in EV4; the operating conditions of this apparatus are 91°C and 40 bar; stream 14 goes to the heat exchanger EV3/2 of the sulphur dioxide evaporator EV3, here it is cooled down to 70°C by the evaporating liquid in EV3; the working conditions of this apparatus are 65°C and 40 bar; stream 15 leaving EV3 goes to the heat exchanger of EV1 in which it is cooled down to 40°C; sulphur trioxide condenses and goes to the storage tank TA1 as stream 35; stream 16 coming out from the heat exchanger goes to the condenser C1 in which it is cooled down to 30°C; sulphur trioxide condenses and goes to the storage tank TA1 as stream 36; gaseous stream 17 leaves the heat exchanger at 30°C and 2.5 bar and is pressurized to 7.5 bar by compressor CO1; the outlet temperature of stream 18 is 148°C; this stream is cooled down in the heat exchanger HX3 by the reacting mixture of stream 41; stream 19 leaves the apparatus at 96°C and goes to the heat exchanger EV3/1 of the sulphur dioxide

evaporator EV3; here it is cooled down by the evaporating liquid and the outlet temperature of stream 20 is 70°C; this stream enters the condenser C3, where its temperature drops to 30°C; sulphur trioxide condenses (stream 21), it is preheated in C4 and enters the evaporator EV4, at 62°C, as stream 22. Stream 23 leaves condenser C3 at 30°C and 7.5 bar and is pressurized up to 17.5 bar in compressor CO2; the temperature of stream 24 is 121°C; it drops to 70°C in the heat exchanger HX4; the energy developed is used to heat up stream 38 from 65 to 101°C (stream 39 constituting the carrier of evaporator EV4). Some sulphur trioxide condenses in C4 and leaves the apparatus as stream 40, going to evaporator EV3; the working conditions of C4 are 30°C and 17.5 bar; stream 25 enters C4 at 70°C and leaves the apparatus as stream 26 at 30°C going to compressor CO3; here it is pressurized up to 40 bar and the temperature of stream 27 is 118°C. this stream will be the carrier of evaporator EV2, already described; stream 37 leaves EV2 at 60°C and 40 bar going to the sulphur dioxide evaporator EV3, where its chemical composition is further enriched in $SO_2$, $O_3$ and $SO_3$, constituting the carrier for the evaporator EV4; the gaseous stream 41 leaves this apparatus at 91°C and 40 bar, going to the heat exchanger HX3; the outlet temperature of stream 42 is 130°C; under these conditions it goes to the heat exchanger HX2, closing the loop.

Electricity is produced in the generator G as the net work corresponding to the difference between $W = \Sigma TU - \Sigma CO$.

II. 4 Mass and enthalpy balances

The complete situation of the plant from the point of view of the mass and energy balances, can be seen in Table IV. The chemical composition of each stream, with the physical phase, pressure, temperature and related enthalpies are given. These

elements allow the evaluation of apparatus power and a rough estimation of their cost. To pass from the molar balance corresponding to the synthesis of 1 mol $SO_3$ to that corresponding to the plant capacity, it is necessary to multiply by the molar flow, knowing that 1 mol corresponds to an energy evolution of 26.71 Kcal.

Table V gives the main characteristics of all heat exchangers involved in the process (they are the most important pieces of apparatus because energy is both the raw material and the product of the plant). From the elements given in this table, and those of Table IV, the overall heat transfer coefficient of each of them can be evaluated and also their heat exchanging areas and relative cost estimation.

Figure 9 shows the mass-flow diagram of the process. As one can see, reactors and separation efficiencies can be identified immediately. Also some idea of apparatus size can be gained by looking at the ratio between the main and auxiliary flows.

II.5 Process efficiency

In Table VI the power of the main pieces of the apparatus is evaluated and from them the net available electricity at the generator G is shown. Process efficiency is given as the ratio between the available electricity and the energy contents of chemicals. This latter value is the same as that used in the process efficiency evaluated under I.5.

This means that it will disappear during the evaluation of the overall process efficiency. As we have already mentioned in Section I.5 thermal losses and liquid pump ower are not considered at this level of calculation because their value is in the order of magnitude of the approximation error.

## III. Coupling of a cracking plant and a catalytic oxidation plant.

### III.1 General remarks

This aspect of the problem is more abstract than practical because as has already been mentioned, both plants can be run independently and under very different load factors. There are two important arguments which lie within the two processes: storage of chemicals and overall process efficiency; both will be discussed in detail.

Concerning the independence of the processes just mentioned, we can say that the physical distance between the two plants does not constitute a limiting argument. In other words, the plants can be placed as far as is needed one from the other without affecting their operation and with hardly any effect on the coupled efficiency. Obviously this may be of interest if some factors became important, otherwise it is more convenient to transport electricity than chemical products, mainly for medium or small power plants. Figure 10 shows a conceptual scheme of the coupling between the two processes; they are really linked only by the storage vessels.

There is no argument linking the power of the two in some way; on the contrary, they are free to be related to the energy source power in the case of the decomposition plant and to the consumer requirements in the oxidation plant. The only thing to be taken into consideration is the fact that the integral of the power must be, over a given period, the same for both.

### III.2 Storage volumes

This is one of the most important aspects of the problem. The capacity of the system is only

limited by this factor. From the mass and enthalpy balances, 1 mol of $SO_3$ comports the consumption of 29.5 Kc (total energy). The masses involved are:

$SO_3$ = 1.12 mol = 90 gr. = 46.5 cc (liquid)
$SO_2$ = 0.95 mol = 60.5 gr. = 42.4 cc (liquid)
$O_2$ = 0.55 mol = 17 gr. = 12.3 lt (gas at normal temperature and pressure)

The required storage volumes at the operating conditions are:

46.5 cc $SO_3$ at 2 bar
42.2 cc $SO_2$ at 6 bar
205 cc $O_2$ at 60 bar

Taking the Kw.h (thermal) as a basis for the evaluation, it is noted that it requires the decomposition of 29 mol $SO_3$.

Volumes corresponding to the storage of 1 Kw.h input are:

$SO_3$ = 1.35 lt at 2 bar
$SO_2$ = 1.22 lt at 6 bar
$O_2$ = 5.95 lt at 60 bar

This amounts to about 8.5 liters per stored Kw.h. Just to give an example of what this means, we present the required volumes for 5.300 Kw.h. and 53.000 Kw.h. The two figures correspond to the amount of energy to be stored in order to give an electrical power of 158 Kw and 1580 Kw, respectively, starting from two solar plants of 1 and 100 $Mw_{th}$:

| | 1 Mw h | 10 Mw h |
|---|---|---|
| $SO_3$ at 2 bar | 7.150 lt | 71.500 lt |
| $SO_2$ at 6 bar | 6.450 lt | 64.500 lt |
| $O_2$ at 60 bar | 31.500 lt | 315.000 lt |
| | $T_1$=45.1 $m^3$ | $T_2$ = 451 $m^3$ |

To repeat: these volumes allow the production of 3.800 and 38.000 $Kw.h_e$ during 24 h of a day, starting from two solar plants of 1 and 10 $Mw_{th}$. The capacities of the storage system are 660 or 6.600 $Kw_{th}$ for the cracking plant and 330 ot 3.300 $Kw_{th}$ for the oxidation

plant the electrical power of the latter is 158 or 1.580 $Kw_e$.
Translating the required storage volumes into real vessels:

| | $1\ Mw_{th}$ | $10\ Mw_{th}$ |
|---|---|---|
| $SO_3$ at 2 bar | 1 spherical of 2.4 mt dia | 1 spherical of 5.15 mt dia |
| $SO_2$ at 6 bar | 1 spherical of 2.3 mt dia | 1 spherical of 5 mt dia |
| $O_2$ at 60 bar | 1 cylindrical of 2 mt dia and 10 mt long | 10 cylindrical of 2 mt dia and 10 mt long |

III.3 Overall efficiencies

By this definition is meant the complex efficiency corresponding to the coupling between the two processes. One must take into account the results presented in Tables III and VI.
One can distinguish two different efficiencies by looking at the energy source:

1) SOLAR OR NUCLEAR HEAT → STORAGE → ELECTRICITY

Heat input: $R = 26.361\ Kc_{th}$
Electricity input: $CT_1 = 3.153\ Kc_e$
Electricity output: $G = 15.7\ Kc_e$
Net electricity produced $= E1 = G-CT_1 = 12.547\ Kc_e$

$$\eta_1 = \frac{E1}{R} = \frac{12.547}{26.361} = 47.6\%$$

2) ELECTRICITY → STORAGE → ELECTRICITY
Total electrical input $= E2 = R + CT1 = 29.514\ Kc_e$
Electrical output $= G = 15.7\ Kc_e$

$$\eta_2 = \frac{G}{E2} = \frac{15.7}{29.514} = 53.2\%$$

IV APPLICATIONS

IV.1 Nuclear heat source

In the case of fission reactors, the application is in the increasing of the utilization factor of the nuclear installation. The reactor must be an HTR (High Temperature Reactor) type or in certain cases a Fast Breeder Reactor. As one can see in Fig. 11 and 12, the nuclear reactor works 24 h per day at full thermal power (utilization factor 100%). During the night the amount of electricity produced is that corresponding to the grid requirements and the remaining thermal energy is stored as $SO_2$ and $O_2$ by employing a cracking plant. During the day all the thermal power is transformed into electricity and the internal energy of the stored chemicals is also transformed in an oxidation plant.

In this configuration the amortisation of the nuclear plant is optimised and the available electrical power during the day is higher than that corresponding to the conventional conversion of the nominal thermal power into electricity. The capacity of the nuclear plant can be lower than that otherwise required (and the investment too).

IV. 2 Solar Source

This is the most suitable example for the application of the system, because the size of these plants are such that a direct employment could be envisaged. The basic concept is to pass all the solar power through a cracking plant, because:

a) no start-up time is required (see section II.3) and therefore the solar energy can be immediately taken up at any time when available;

b) at any moment an oxidation plant can produce the electricity required, day and night; it depends only upon the storage vessels.

As far as the relationship between the different power plants is concerned, see section III.2. Here the concept is repeated:

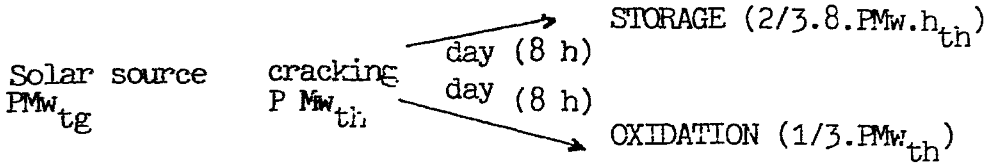


Practically the electricity available from the oxidation plant corresponds to 0.473 . P/3 $Mw_e$ 24 h per day, in order to produce

$$0.473 \cdot 8 \cdot P\ Mw.h_e/day$$

obviously this configuration can be changes as a function of the consumer market; the real output of the oxidation plant can be modulated in order to satisfy the request and the only thing to do is to modify the flow of chemicals to and from the storage vessels. The functional freedom is governed by the volume of the storage vessels. Two examples of the storage volumes required as a function of the solar plant power are reported in section III.2.

As was already mentioned in II.3, the plant is always at the working temperature. Thermal insulation will be designed with care and the very small thermal losses will be compensated by recombining $SO_2$ and $O_2$ in the same solar furnace, producing enough $SO_3$ to keep the chemical composition of the reacting mixture constant. We remind the reader that the cracking plant was designed in such a way as to allow its operation between zero and the nominal power of the plant; this flexibility constitutes one of its merits in the solar application.

IV.3 <u>Electrical source</u>

In this particular case the purpose of the system is to store electricity when it is available in excess and to regenerate it when necessary in order to operate the power plants at their maximum load factor. All this can be accomplished with an overall efficiency

as high as 53%. Although both plants can be built in any size by employing only current technology, the limiting factor for this application is the storage volume required for oxygen. Possibly in the near future some improvement in the field of underground storage for oxygen will be made and the system will be ready to apply these results. At present an order of magnitude of 200-300 $Mw.h_e$ can be considered. These plants do not require any particular characteristic for the situs; in fact they can be built anywhere. This aspect constitutes a very great advantage when the construction of many of them is envisaged.
Possibly the flexibility of thc plant can make it more attractive for peak-shaving applications than for pure accumulation.

IV.4 Other uses

A possible field of application of the oxidation plant system is in sulphuric acid industrial plants, in which sulphur trioxide can be produced from sulphur dioxide and oxygen (or air), at the same time producing electricity at high efficiency instead of heat. This aspect should also be investigated because of its importance for the general economy of energy.

Another application can be seen by optimising the cracking plant in order to obtain the cracking of $SO_3$ at lower temperatures. In this case the equilibrium conversion of the reactor will be lower (see Fig. 3) and the recycling mass will increase, giving a lower overall efficiency (increase of the pumping power and separation work). This negative aspect must be balanced against the possibility of incrasing the temperature of the outside heat source from about 650 to 900°C or more (by also modifying the oxidation plant). This arrangement can allow the use of a fast breeder reactor for high quality process heat application or

the storage of part of its power as chemicals and the production of electricity at very high efficiency by using a standard oxidation plant. This approach allows reactor operation at very high utilization factors.

Table I. Cracking plant. Process Characteristics

| | | Phase | P (Bar) | T (°C) | H (kc) |
|---|---|---|---|---|---|
| 1 | $1.16\ SO_3 + 2.52\ SO_2 + 1.26\ O_2$ | G | 6.5 | 900 | −237.091 |
| 2 | $1.16\ SO_3 + 2.52\ SO_2 + 1.26\ O_2$ | G | 6.5 | 153 | −282.065 |
| 3 | $0.70\ SO_3 + 1.52\ SO_2 + 0.76\ O_2$ | G | 6.5 | 153 | −170.157 |
| 4 | $0.46\ SO_3 + 1.0\ SO_2 + 0.5\ O_2$ | G | 6.5 | 153 | −111.908 |
| 5 | $0.46\ SO_3 + 1.0\ SO_2 + 0.5\ O_2$ | G | 6.5 | 75 | −113.493 |
| 6 | $0.34\ SO_3$ | L | 6.5 | 30 | − 35.023 |
| 7 | $0.12\ SO_3 + 1.0\ SO_2 + 0.5\ O_2$ | G | 6.5 | 30 | − 82.218 |
| 8 | $0.12\ SO_3 + 1.0\ SO_2 + 0.5\ O_2$ | G | 25 | 168 | − 80.079 |
| 9 | $0.07\ SO_2$ | L | 25 | 73 | − 5.299 |
| 10 | $0.12\ SO_3 + 0.93\ SO_2 + 0.5\ O_2$ | G | 25 | 73 | − 76.644 |
| 11 | $0.12\ SO_3 + 0.93\ SO_2 + 0.5\ O_2$ | G | 35 | 108 | − 76.128 |
| 12 | $0.03\ SO_3 + 0.597\ SO_2$ | L | 35 | 73 | − 48.208 |
| 13 | $0.09\ SO_3 + 0.333\ SO_2 + 0.5\ O_2$ | G | 35 | 73 | − 31.755 |
| 14 | $0.09\ SO_3 + 0.333\ SO_2 + 0.5\ O_2$ | G | 60 | 133 | − 31.257 |
| 15 | $0.06\ SO_3 + 0.208\ SO_2$ | L | 60 | 73 | − 21.781 |
| 16 | $0.09\ SO_3 + 0.875\ SO_2$ | L | 7 | 35 | − 76.182 |
| 17 | $0.03\ SO_3 + 0.125\ SO_2 + 0.5\ O_2$ | G | 60 | 73 | − 11.458 |
| 18 | $0.03\ SO_3 + 0.075\ SO_2$ | L | 60 | 35 | − 8.819 |
| 19 | $0.05\ SO_2 + 0.5\ O_2$ | G | 60 | 35 | − 3.507 |
| 20 | $1.46\ SO_3$ | L | 6.5 | 30 | −150.395 |
| 21 | $0.408\ SO_3$ | L | 6.5 | 30 | − 42.028 |
| 22 | $0.408\ SO_3$ | L | 6.5 | 68 | − 41.160 |
| 23 | $0.420\ SO_3$ | L | 6.5 | 30 | − 43.264 |
| 24 | $0.420\ SO_3$ | L | 6.5 | 68 | − 42.370 |
| 25 | $0.632\ SO_3$ | L | 6.5 | 30 | − 65.102 |
| 26 | $0.632\ SO_3$ | L | 6.5 | 61 | − 64.005 |
| 27 | $2.16\ SO_3 + 1.52\ SO_2 + 0.76\ O_2$ | G | 6.5 | 70 | −310.011 |
| 28 | $2.16\ SO_3 + 1.52\ SO_2 + 0.76\ O_2$ | G | 6.5 | 102 | −308.426 |
| 29 | $2.16\ SO_3 + 1.52\ SO_2 + 0.76\ O_2$ | G | 6.5 | 849 | −263.452 |

Table II. Cracking plant.
Heat Exchangers Characteristics

| | Power kc/mol | PRIMARY | | | | | SECONDARY | | | | | ΔT(°C) M, L | P (Bar) |
|---|---|---|---|---|---|---|---|---|---|---|---|---|---|
| | | Gas | Liq | Phase Change | $T_1$ | $T_2$ | Gas | Liq | Phase Change | $T_3$ | $T_4$ | | |
| HX1 | 44.974 | X | | | 900 | 153 | X | | | 102 | 849 | 51 | 6.5/6.5 |
| HX2 | 1.585 | X | | | 153 | 75 | X | | | 70 | 102 | 20 | 6.5/6.5 |
| HX3 | 0.894 | | X | | 73 | 35 | | X | | 30 | 68 | 5 | 6.5/6.5 |
| | 47.453 | | | | | | | | | | | | |
| C1 | 3.748 | | | X | 75 | 30 | | X | | 30 | 61 | 9 | 6.5/6.5 |
| C2 | 0.868 | | | X | 73 | 35 | | X | | 30 | 68 | 5 | 60/6.5 |
| | 4.616 | | | | | | | | | | | | |
| EV1 | 1.864 | X | | X | 168 | 73 | | | X | 70 | 70 | 29 | 25/6.5 |
| EV2 | 3.835 | | | X | 108 | 73 | | | X | 70 | 70 | 8 | 35/6.5 |
| EV3 | 1.982 | | | X | 133 | 73 | | | X | 70 | 70 | 8 | 60/6.5 |
| | 7.681 | | | | | | | | | | | | |
| | 59.750 | | | | | | | | | | | | |

Nominal Thermal Power = $Q_0$ = 26.710 kc/mol

Exchanged Power Ratio = $\frac{59.750}{26.710}$ = 2.22

Table III. Cracking Plant.
Enthalpic Analysis

Compressor

| | | | | |
|---|---|---|---|---|
| Co – 1 | = | H8–H7 | = | 2.139 kc |
| Co – 2 | = | H11–H10 | = | 0.516 kc |
| Co – 3 | = | H14–H13 | = | 0.498 kc |
| | | | $CT_1$ = | 3.153 kc |

Reactor Heat

R = H1–H27 = 26.361 kc

Total input energy

$Ho = R + T_1 = 29.514$ kc

Output Enthalpy

$$Ho. = \Delta H_R + \Delta H_{EV}^{SO_3} - \Delta H_{EV}^{SO_2}$$

| | | | | |
|---|---|---|---|---|
| 30°C | $\Delta H_R$ | = | | – 23.656 kc |
| | $\Delta H_{EV}^{SO_3}$ | = 1.0 x8.480 | = | – 8.480 kc |
| | $\Delta H^{SO_2}$ | = 0.95x5.712 | = | – 5.426 kc |
| | | | Ho = | – 26.710 kc |

Internal (stored) energy to input energy

$$\eta_I = \frac{26.710}{29.514} = 90.5\%$$

WASTE HEAT

| | | | | ΔT(°C) |
|---|---|---|---|---|
| $C_1$ | = (H6 + H7 – H5) – (H26 – H25) | = | 2.651 kc | 49-30 |
| $WH_S$ | $= S_{T_{18}}^{35} + S_{T_{19}}^{35} + S_{T_{16}}^{35}$ | = | 0.154 kc | |
| | | $T_2$ = | 2.805 kc | |

Table IV. Oxidation Plant.
Process Characteristics

| | | Phase | P (Bar) | T (°C) | H (kc) |
|---|---|---|---|---|---|
| 1 | $1.06\ SO_3 + 0.4\ SO_2 + 1.55\ O_2$ | G | 40 | 777 | −103.284 |
| 2 | $1.06\ SO_3 + 0.4\ SO_2 + 1.55\ O_2$ | G | 10 | 486 | −113.801 |
| 3 | $0.63\ SO_3 + 0.24\ SO_2 + 0.92\ O_2$ | G | 10 | 486 | − 67.790 |
| 4 | $0.43\ SO_3 + 0.16\ SO_2 + 0.63\ O_2$ | G | 10 | 486 | − 46.011 |
| 5 | $0.43\ SO_3 + 0.16\ SO_2 + 0.63\ O_2$ | G | 10 | 72 | − 51.486 |
| 6 | $0.237\ SO_3 + 0.16\ SO_2 + 0.63\ O_2$ | G | 10 | 64 | − 33.418 |
| 7 | $0.04\ SO_3 + 0.16\ SO_2 + 0.63\ O_2$ | G | 10 | 30 | − 15.102 |
| 8 | $0.10\ SO_3 + 0.66\ SO_2 + 0.88\ O_2$ | G | 10 | 35 | − 56.142 |
| 9 | $0.10\ SO_3 + 0.66\ SO_2 + 0.88\ O_2$ | G | 10 | 60 | − 55.793 |
| 10 | $0.10\ SO_3 + 0.66\ SO_2 + 0.88\ O_2$ | G | 10 | 415 | − 50.318 |
| 11 | $1.23\ SO_3 + 0.4\ SO_2 + 1.55\ O_2$ | G | 10 | 757 | −118.108 |
| 12 | $1.23\ SO_3 + 0.4\ SO_2 + 1.55\ O_2$ | G | 2.5 | 474 | −129.144 |
| 13 | $1.23\ SO_3 + 0.4\ SO_2 + 1.55\ O_2$ | G | 2.5 | 185 | −139.600 |
| 14 | $1.23\ SO_3 + 0.4\ SO_2 + 1.55\ O_2$ | G | 2.5 | 113 | −142.053 |
| 15 | $1.23\ SO_3 + 0.4\ SO_2 + 1.55\ O_2$ | G | 2.5 | 70 | −143.356 |
| 16 | $0.934\ SO_3 + 0.4\ SO_2 + 1.55\ O_2$ | G | 2.5 | 40 | −116.331 |
| 17 | $0.50\ SO_3 + 0.40\ SO_2 + 1.55\ O_2$ | G | 2.5 | 30 | − 75.567 |
| 18 | $0.50\ SO_3 + 0.40\ SO_2 + 1.55\ O_2$ | G | 7.5 | 148 | − 72.980 |
| 19 | $0.50\ SO_3 + 0.40\ SO_2 + 1.55\ O_2$ | G | 7.5 | 96 | − 74.149 |
| 20 | $0.50\ SO_3 + 0.40\ SO_2 + 1.55\ O_2$ | G | 7.5 | 70 | − 74.746 |
| 21 | $0.36\ SO_3$ | L | 7.5 | 30 | − 37.084 |
| 22 | $0.36\ SO_3$ | L | 7.5 | 62 | − 36.438 |
| 23 | $0.14\ SO_3 + 0.4\ SO_2 + 1.55\ O_2$ | G | 7.5 | 30 | − 41.537 |
| 24 | $0.14\ SO_3 + 0.4\ SO_2 + 1.55\ O_2$ | G | 17.5 | 121 | − 39.991 |
| 25 | $0.14\ SO_3 + 0.4\ SO_2 + 1.55\ O_2$ | G | 17.5 | 70 | − 40.869 |
| 26 | $0.06\ SO_3 + 0.4\ SO_2 + 1.55\ O_2$ | G | 17.5 | 30 | − 33.974 |
| 27 | $0.06\ SO_3 + 0.4\ SO_2 + 1.55\ O_2$ | G | 40 | 118 | − 32.573 |
| 28 | $0.325\ SO_2 + 0.041\ SO_3$ | L | 40 | 30 | − 29.120 |
| 29 | $0.475\ SO_2 + 0.060\ SO_3$ | L | 10 | 30 | − 42.568 |
| 30 | $0.150\ SO_2 + 0.019\ SO_3$ | L | 40 | 30 | − 13.446 |
| 31 | $0.25\ O_2 + 0.025\ SO_2$ | G | 10 | 30 | − 1.764 |
| 32 | $0.25\ O_2 + 0.025\ SO_2$ | G | 40 | 30 | − 1.764 |
| 33 | $0.193\ SO_3$ | L | 10 | 64 | − 19.513 |
| 34 | $0.197\ SO_3$ | L | 10 | 30 | − 20.293 |
| 35 | $0.296\ SO_3$ | L | 2.5 | 40 | − 30.325 |
| 36 | $0.434\ SO_3$ | L | 2.5 | 30 | − 44.706 |
| 37 | $0.101\ SO_3 + 0.75\ SO_2 + 1.8\ O_2$ | G | 40 | 60 | − 62.013 |
| 38 | $0.20\ SO_3 + 0.90\ SO_2 + 1.80\ O_2$ | G | 40 | 65 | − 81.802 |
| 39 | $0.20\ SO_3 + 0.90\ SO_2 + 1.80\ O_2$ | G | 40 | 101 | − 80.924 |
| 40 | $0.08\ SO_3$ | L | 40 | 30 | − 8.241 |
| 41 | $0.56\ SO_3 + 0.90\ SO_2 + 1.80\ O_2$ | G | 40 | 91 | −114.909 |
| 42 | $0.56\ SO_3 + 0.90\ SO_2 + 1.80\ O_2$ | G | 40 | 130 | −113.740 |
| 43 | $0.56\ SO_3 + 0.90\ SO_2 + 1.80\ O_2$ | G | 40 | 440 | −103.284 |

Table V. Oxidation Plant
Heat Exchangers Characteristics

| | Power kc/mol | PRIMARY | | | | | SECONDARY | | | | | ΔT(°C) M, L | P (Bar) |
|---|---|---|---|---|---|---|---|---|---|---|---|---|---|
| | | Gas | Liq | Phase Change | $T_1$ | $T_2$ | Gas | Liq | Phase Change | $T_3$ | $T_4$ | | |
| HX1 | 5.475 | X | | | 486 | 72 | X | | | 60 | 415 | 33 | 40/10 |
| HX2 | 10.456 | X | | | 474 | 185 | X | | | 130 | 440 | 44 | 40/2.5 |
| HX3 | 1.169 | X | | | 148 | 96 | X | | | 91 | 130 | 10 | 40/7.5 |
| HX4 | 0.878 | X | | | 121 | 70 | X | | | 65 | 101 | 11 | 40/17.5 |
| | 17.978 | | | | | | | | | | | | |
| C1 | 3.942 | | | X | 40 | 30 | | | | | | | 2.5 |
| C2 | 1.977 | | | X | 64 | 30 | X | | | 35 | 60 | 11 | 10/10 |
| C3 | 3.875 | | | X | 70 | 30 | | | | | | | 7.5 |
| C4 | 1.346 | | | X | 70 | 30 | | X | | 30 | 62 | 9 | 17.5/7.5 |
| | 11.140 | | | | | | | | | | | | |
| EV1 | 3.300 | | | X | 35 | | | | X | 70 | 40 | 16 | 10/2.5 |
| EV2 | 1.445 | | | X | 60 | | | | X | 72 | 64 | 7 | 40/10 |
| EV3/1 | 0.597 | | | X | 65 | | X | | | 96 | 70 | 14 | 40/7.5 |
| EV3/2 | 1.363 | | | X | 65 | | X | | | 113 | 70 | 19 | 40/2.5 |
| EV4 | 2.453 | | | X | 91 | | X | | | 185 | 113 | 49 | 40/2.5 |
| | 9.158 | | | | | | | | | | | | |
| | 38.276 | | | | | | | | | | | | |

Nominal Thermal Power = Ho = 26.71 kc/mol

Exchanged Power Ratio $= \frac{38.276}{26.71} = 1.43$

Table VI. Oxidation Plant.
Enthalpic Analysis

**Turbine**

| | | | | |
|---|---|---|---|---|
| TU1 | = H2—H1 | = | | 10.517 kc |
| TU2 | = H12—H11 | = | | 11.036 kc |
| | | | $T_1$ = | 21.553 kc |

**Compressor**

| | | | | |
|---|---|---|---|---|
| CO1 | = H18—H17 | = | | 2.587 kc |
| CO2 | = H24—H23 | = | | 1.546 kc |
| CO3 | = H27—H26 | = | | 1.401 kc |
| | | | $T_2$ = | 5.534 kc |

$G' = T_1 - T_2 = 16.019$ kc

$G = 0.98 \cdot G' = 15.7$ kc

Inlet Enthalpy $H = \Delta H_R + \Delta H_{EV}^{SO_3} - \Delta H_{EV}^{SO_2}$

30°C

| | | | |
|---|---|---|---|
| $\Delta H_R$ | = | | − 23.656 kc |
| $\Delta H_{EV}^{SO_3}$ | = 1.0 x8.48 | = | − 8.480 kc |
| $\Delta H_{EV}^{SO_2}$ | = 0.95x5.712 | = | − 5.426 kc |
| | | Ho = | − 26.710 kc |

$$\eta_e = \frac{G}{Ho} = \frac{15.7}{26.71} = 58.78\%$$

**INTERNAL (STORED) ENERGY TO ELECTRICITY**

| WASTE HEAT | | | | ΔT(°C) |
|---|---|---|---|---|
| C1 | = H17 + H36 − H16 | = | − 3.942 kc | 40-30 |
| C2 | = (H7 + H34 − H6) − (H9 − H8) | = | − 1.628 kc | 58-30 |
| C3 | = H21 ÷ H23 − H20 | = | − 3.875 kc | 70-30 |
| C4 | = (H26 + H40 − H25) − (H22 − H21) | = | − 0.700 kc | 43-30 |
| $WH_S$ | = $S_{T_{33}}^{64} + S_{T_{35}}^{40}$ | = | − 0.533 kc | |
| | | $T_3$ = | − 10.678 kc | |

CLAIMS

1. Process for storing thermal energy by decomposition of a chemical compound and storing the decomposition products characterized in that stored sulphur trioxide is evaporated and preheated to high temperature under an elevated pressure and fed to a catalytic cracking reactor, the gas in the reactor is heated in contact with a catalyst using heat from an outside source, the cracked gases are cooled and separated in their components by stepwise cooling and compression in which sulphur dioxide is condensed and sent to storage and the remaining oxygen is compressed and sent to storage, all the heat required for evaporating and preheating being obtained by heat exchange with the cracked gases and any compression energy being taken from an outside source.

2. Process according to claim 1, characterized in that the starting material is stored as liquid sulphur trioxide and the products are stored as liquid sulphur dioxide at about 6 bars and as gaseous oxygen at about 40-60 bars.

3. Process according to claim 1 or 2, characterized in that the catalyst consists of an iron oxide catalyst and is operated at about 900°C or above and at 2-10 bars.

4. Process according to claims 1-3, characterized in that the sulphur dioxide is condensed at a temperature somewhat higher than the evaporation temperature of liquid sulphur trioxide under process conditions.

5. Process according to claims 1-4, characterized in that a carrier stream mainly consisting of oxygen and sulphur dioxide is circulated through the evaporator for sulphur trioxide, the various heat exchangers, the cracking reactor, at least part of the cooling exchangers and back to the evaporator.

6. Process according to claim 5, characterized in that the cracked gases after splitting off the carrier stream, are cooled to condensed the unconverted sulphur trioxide, and then are stepwise compressed and cooled in heat exchange with the carrier stream and evaporating sulphur trioxide, while condensing the sulphur dioxide.

7. Process according to claim 5 or 6, characterized in that the splitting off of the carrier stream is so regulated that the remaining cracked gases contain an amount of sulphur dioxide and oxygen equivalent to the amount of sulphur trioxide which has been decomposed and the latter stream is passed to the separation steps of sulphur dioxide and oxygen.

8. Process for liberating mechanical energy by burning stored fual at a relatively high temperature using stored oxygen characterized in that stored liquid sulphur dioxide is evaporated, mixed with stored oxygen, the mixture is preheated to an elevated temperature, introduced into a catalytic reactor and at least partially converted into sulphur trioxide with rise of temperature, the reaction gases are expanded in a turbine, producing the desired mechanical energy, the expanded gases are cooled, the sulphur trioxide formed is condensed and sent to storage and the unconverted sulphur dioxide and oxygen are recycled, all the heat required for evaporation of sulphur dioxide and for preheating the gases being supplied by heat exchange with the expanded gases.

9. Process according to claim 8 characterized in that the catalyst used is an iron oxide catalyst which is operated at 0-60 bars.

10. Process according to claim 8 or 9, characterized in that the catalytic reactor is operated at an inlet temperature of 400-500$^{\circ}$C and an

outlet temperature of at least 700°C and at a pressure of 20-40 bars.

11. Process according to claims 8-10, characterized in that the entire process is carried out in the practical absence of water.

12. Process according to claims 8-11, characterized in that the sulphur dioxide is evaporated in a carrier stream, mainly consisting of sulphur dioxide and oxygen and in heat exchange with expanded combustion gases containing condensing sulphur trioxide.

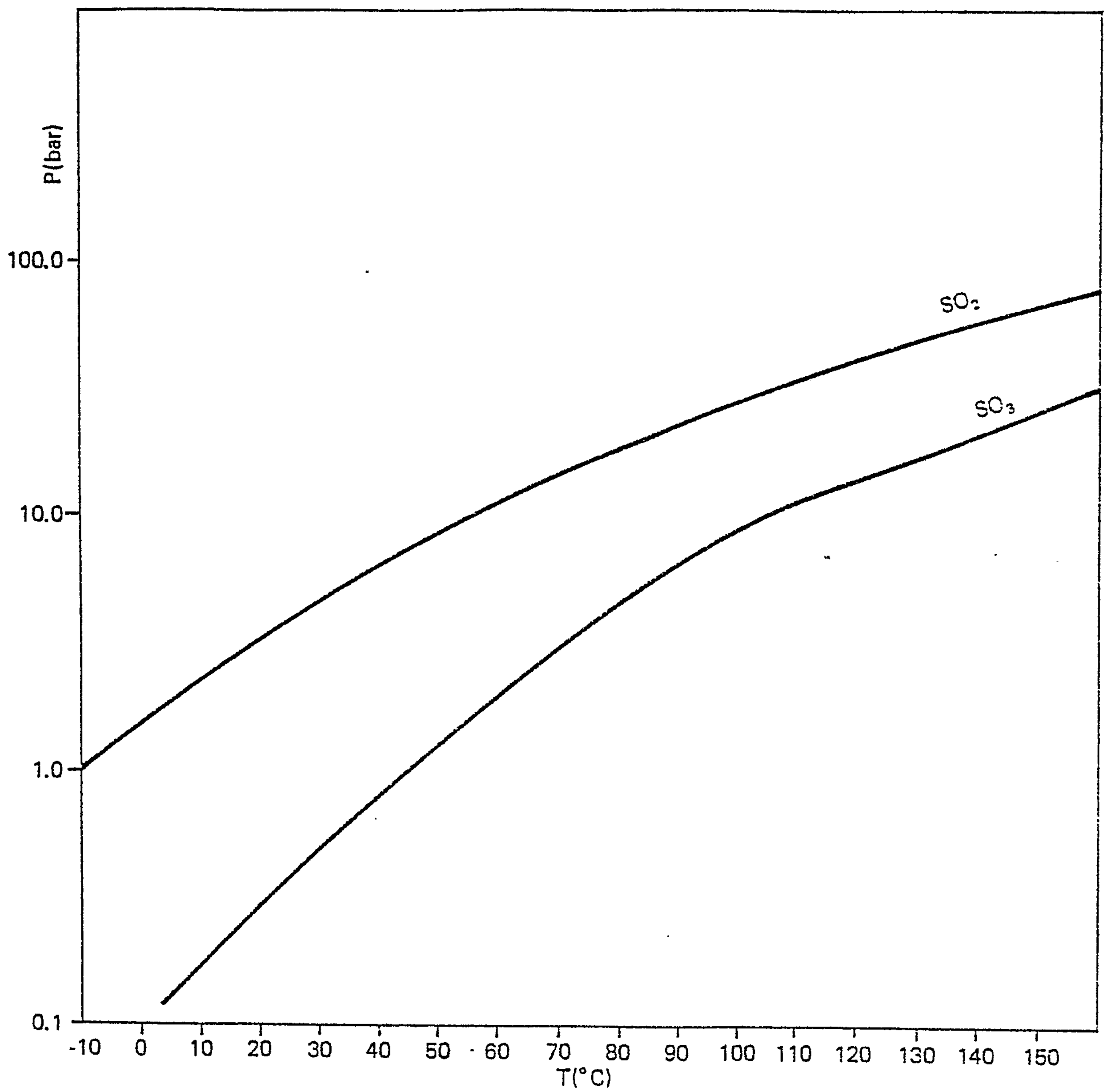


FIG.1 Liquid-Vapour Equilibrium

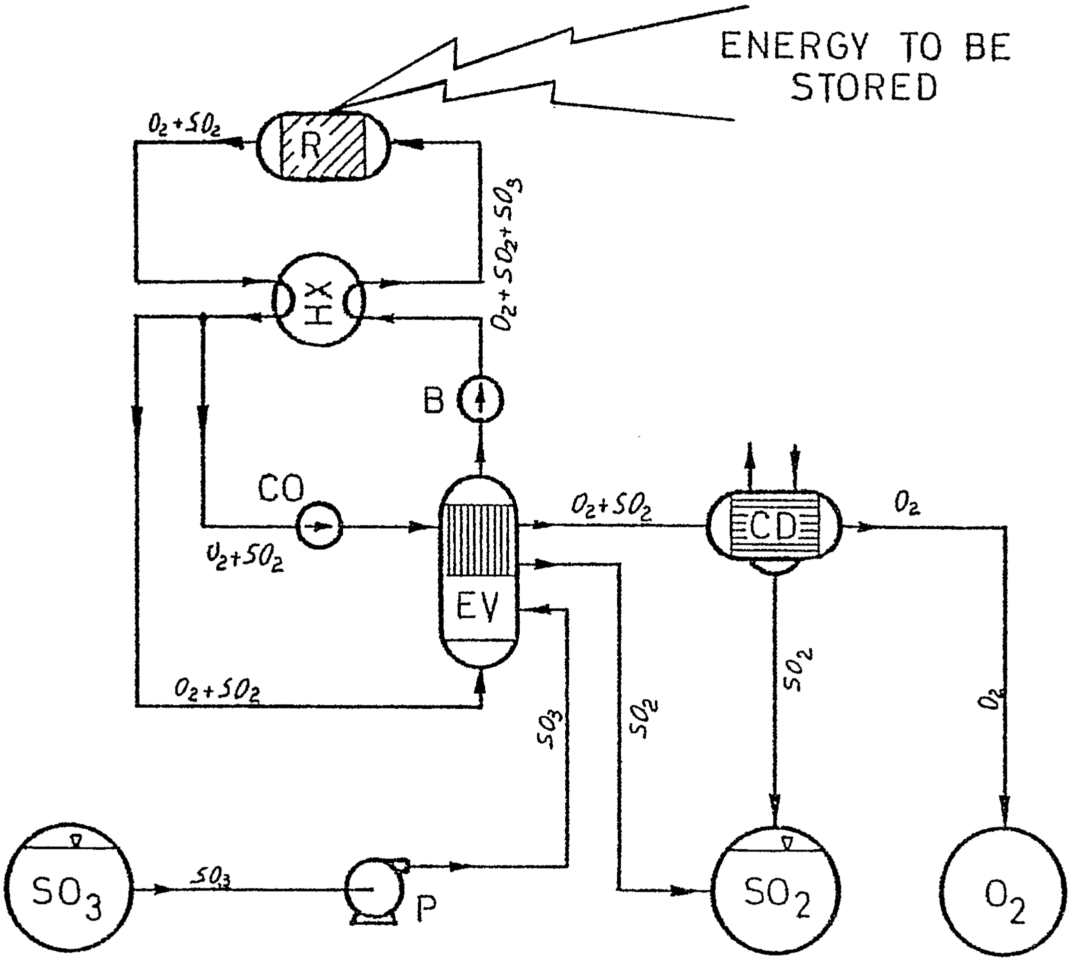
ENERGY TO BE STORED
R
$O_2+SO_2$
$O_2+SO_2+SO_3$
HX
B
CO
$O_2+SO_2$
EV
CD
$O_2$
$SO_2$
$SO_3$
P
$SO_3$
$SO_2$
$O_2$

FIG. 2

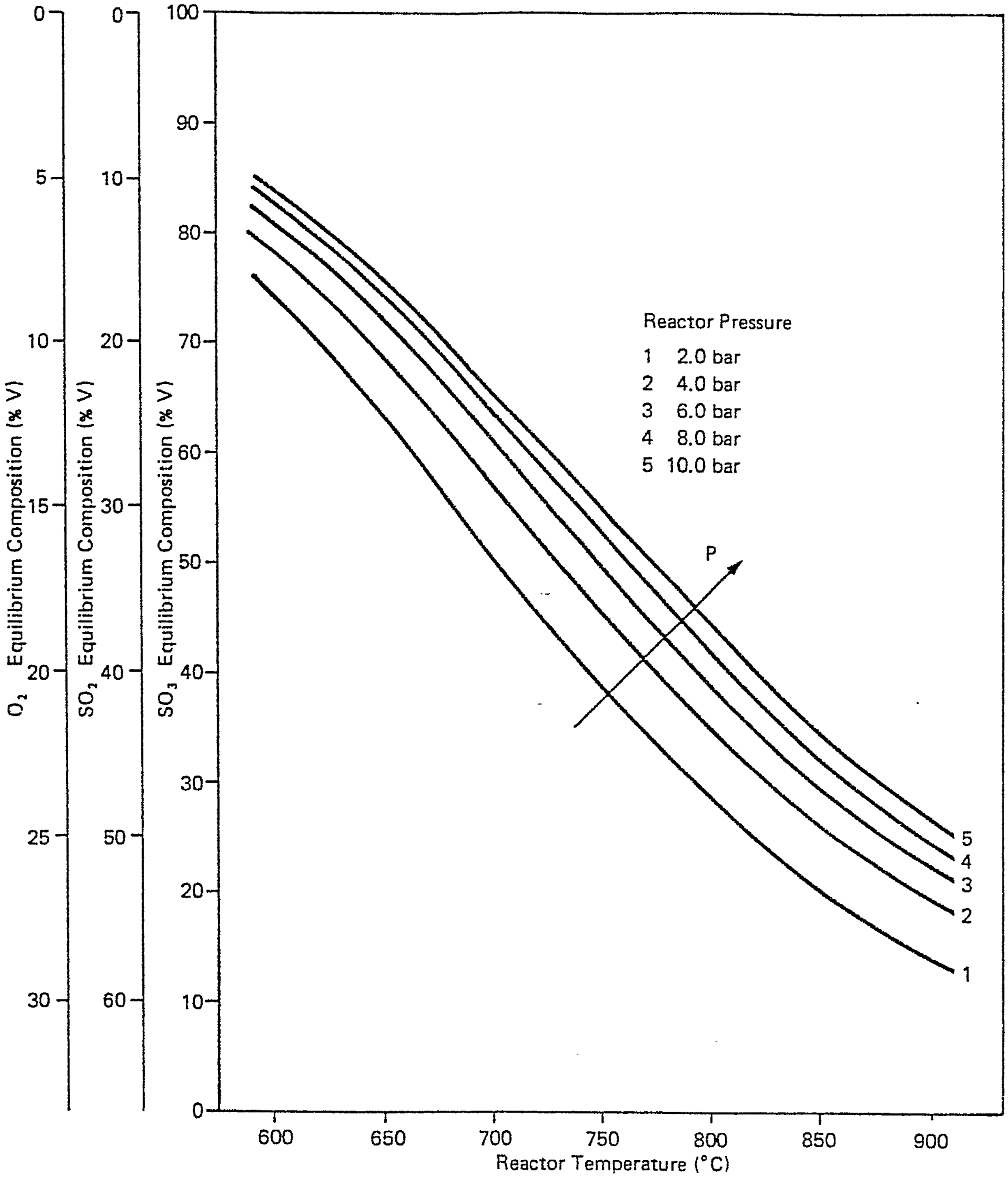


FIG.3 $SO_3 \rightarrow SO_2 + 1/2\ O_2$ - Equilibrium Composition vs. Reactor Outlet Temperature

FIG. 4

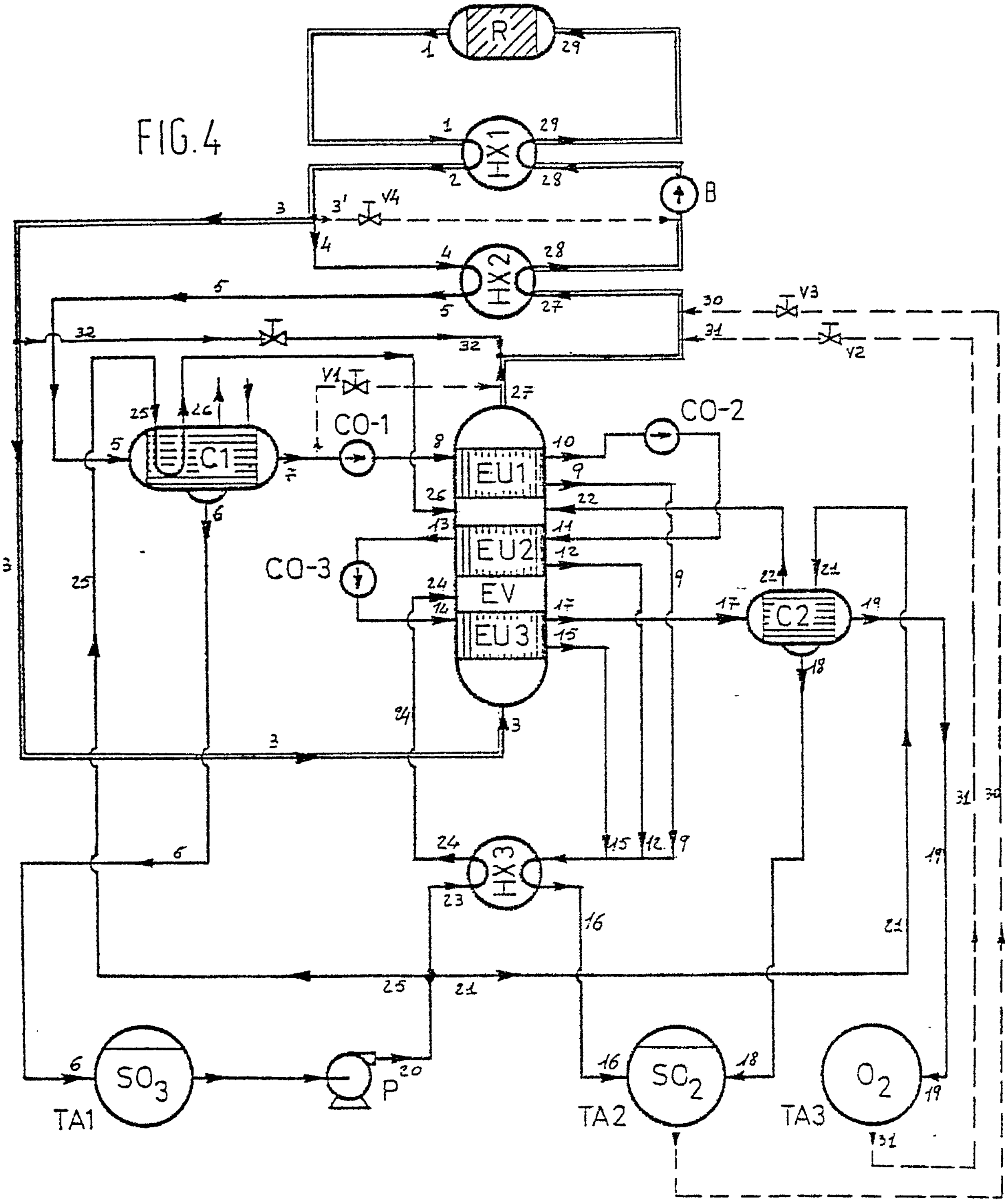
R
HX1
HX2
HX3
B
V1
V2
V3
V4
CO-1
CO-2
CO-3
C1
C2
EU1
EU2
EV
EU3
SO3
SO2
O2
TA1
TA2
TA3
P

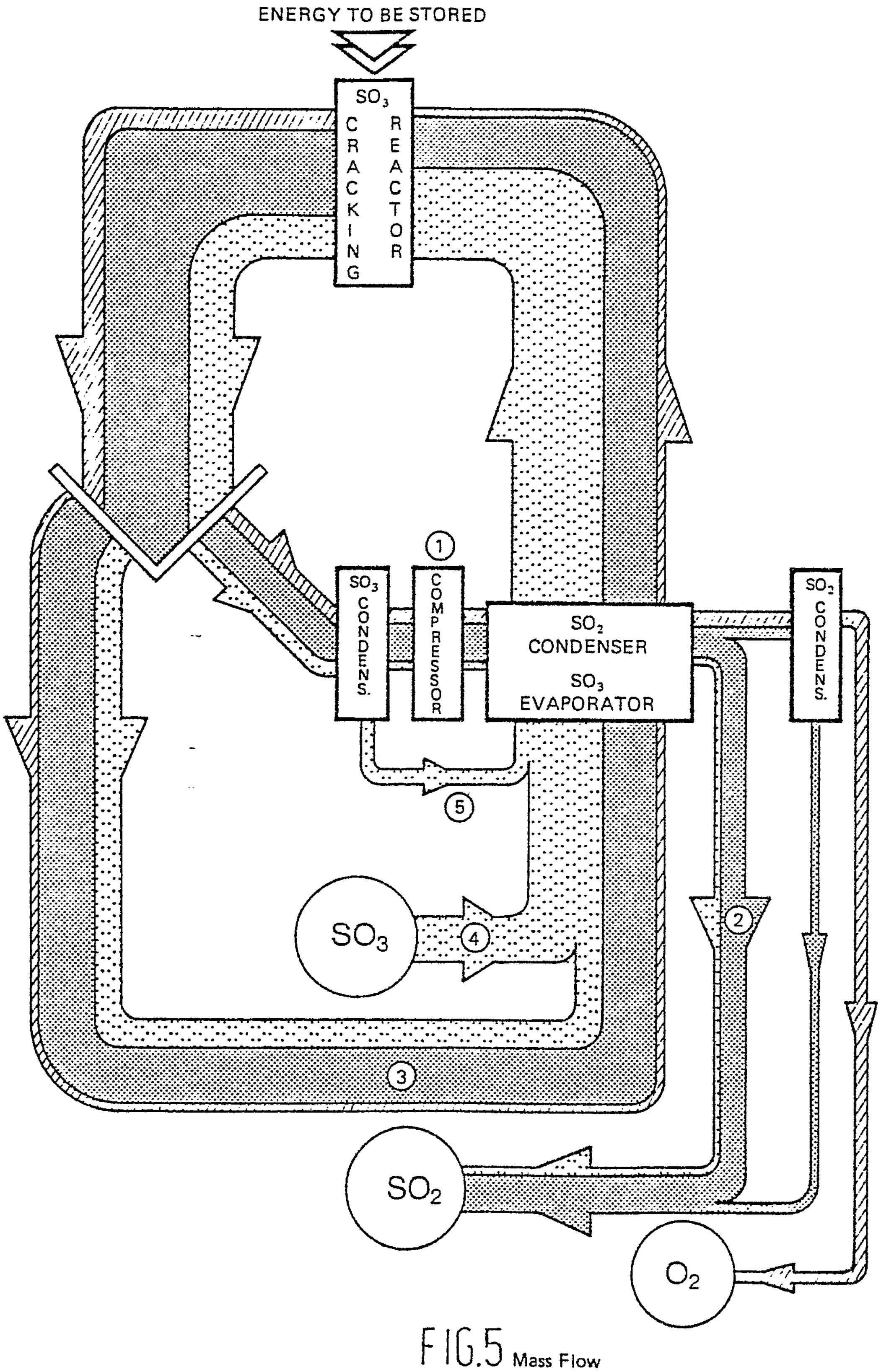


FIG.5 Mass Flow

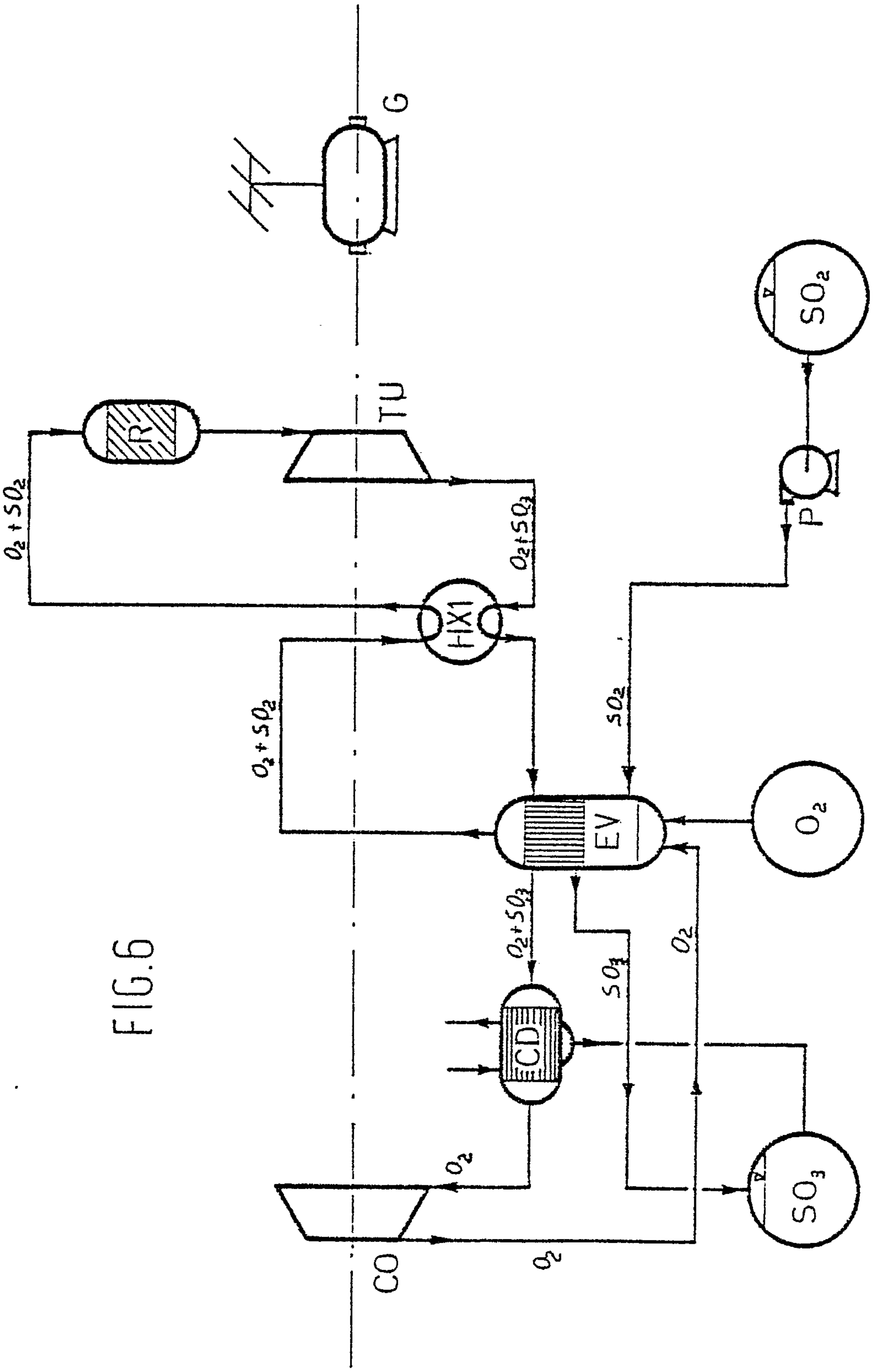
G
R
TU
$O_2+SO_2$
$O_2+SO_3$
HX1
$O_2+SO_2$
$SO_2$
P
$SO_2$
EV
$O_2$
$O_2+SO_3$
$SO_3$
$O_2$
CD
$O_2$
$SO_3$
CO
$O_2$

FIG.6

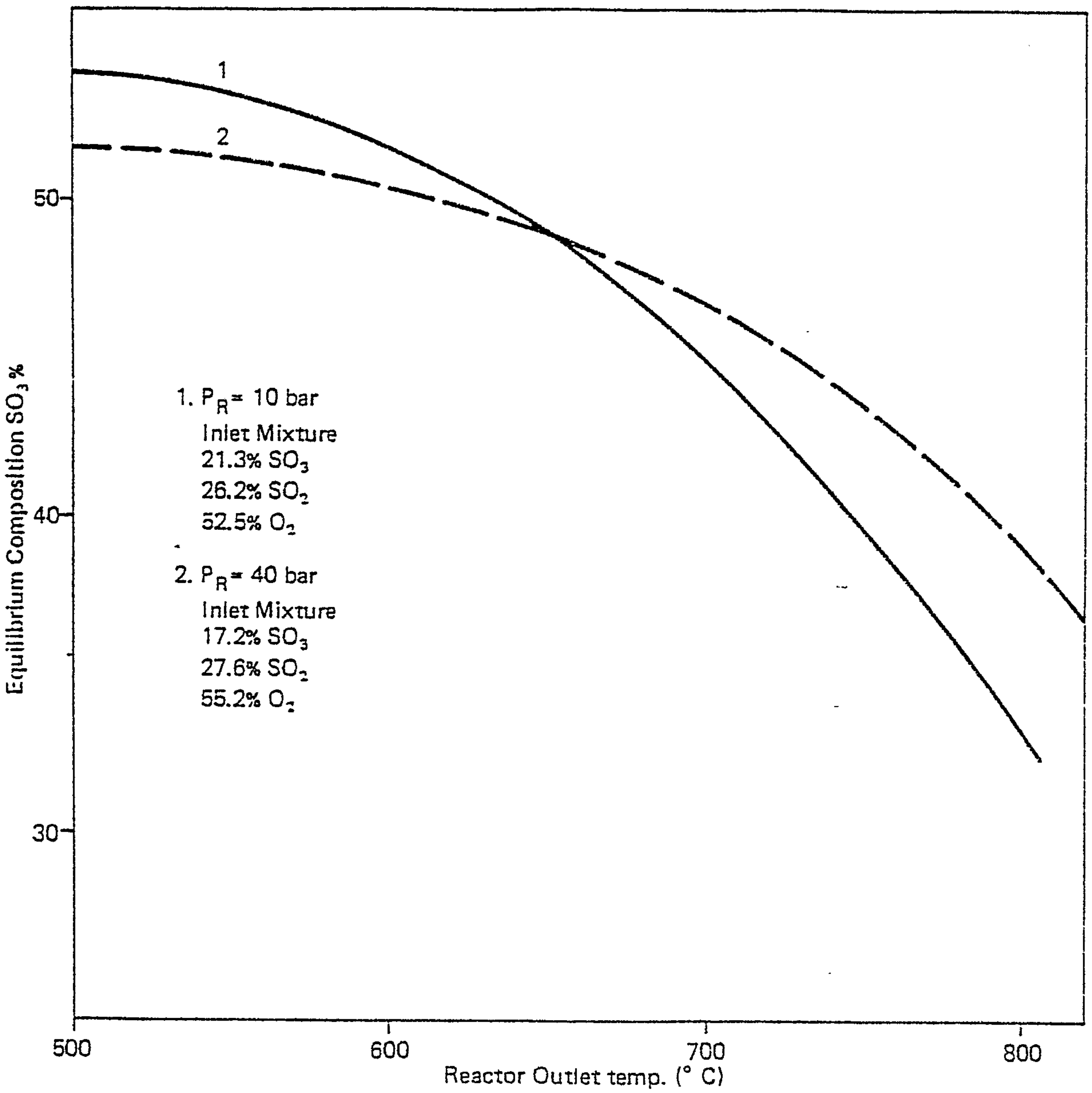


FIG.7 $SO_2 + 1/2\ O_2 \rightarrow SO_3$ - Equilibrium Composition vs. Reactor Outlet Temperature

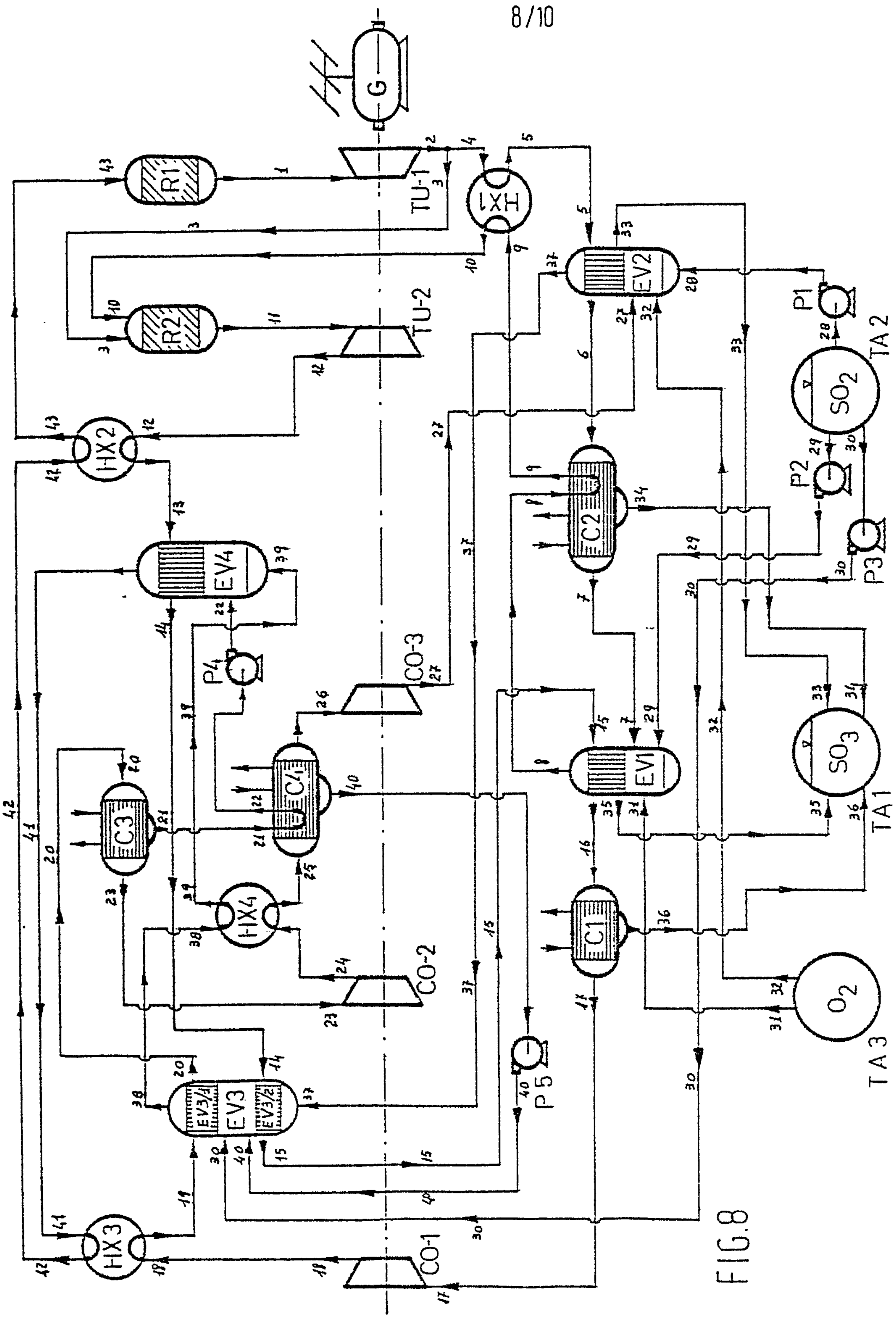
G
TU-1
TU-2
R1
R2
HX1
HX2
HX3
HX4
EV1
EV2
EV3
EV3/1
EV3/2
EV4
C1
C2
C3
C4
CO-1
CO-2
CO-3
P1
P2
P3
P4
P5
SO2
SO3
O2
TA1
TA2
TA3

FIG.8

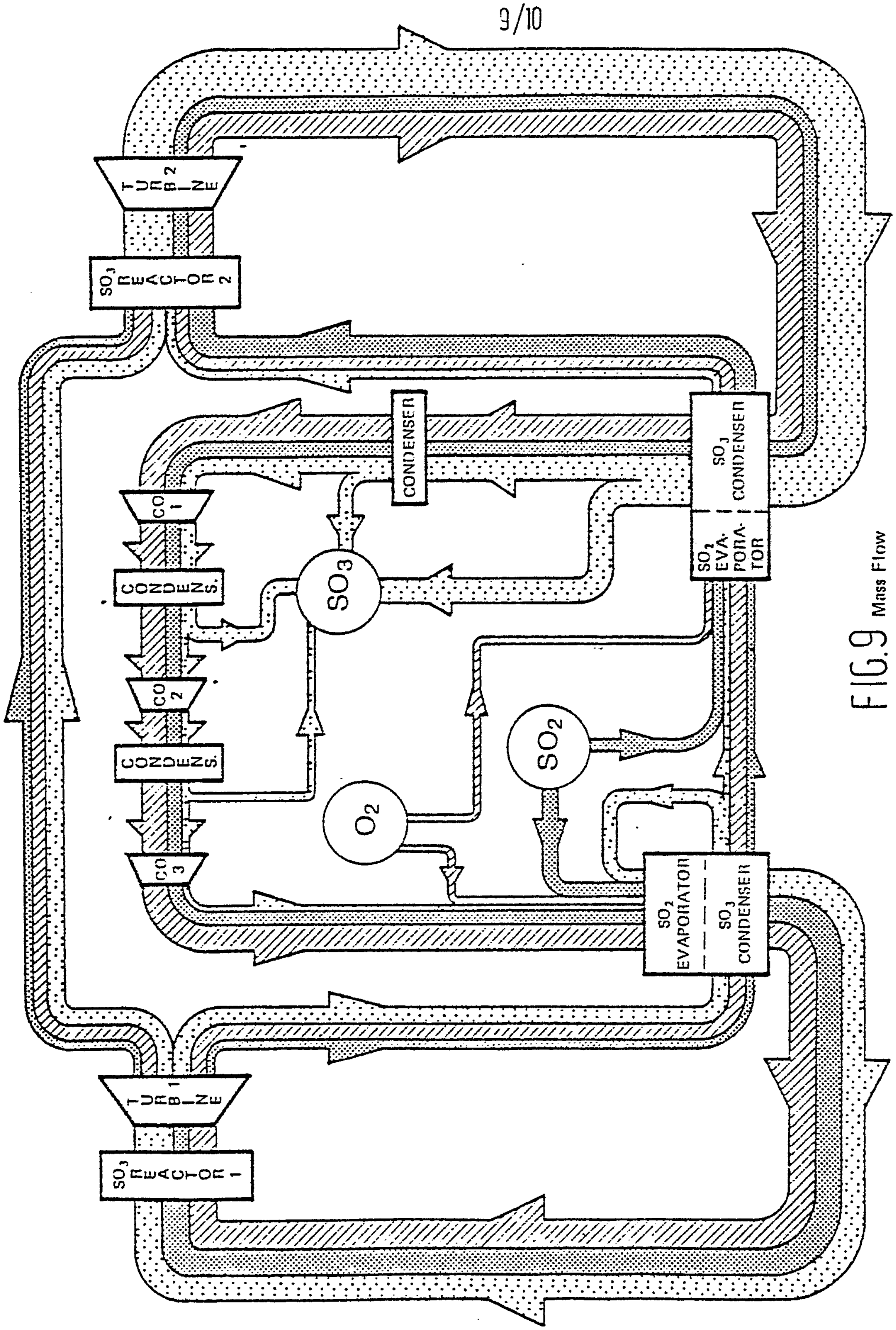


FIG.9 Mass Flow

FIG.10

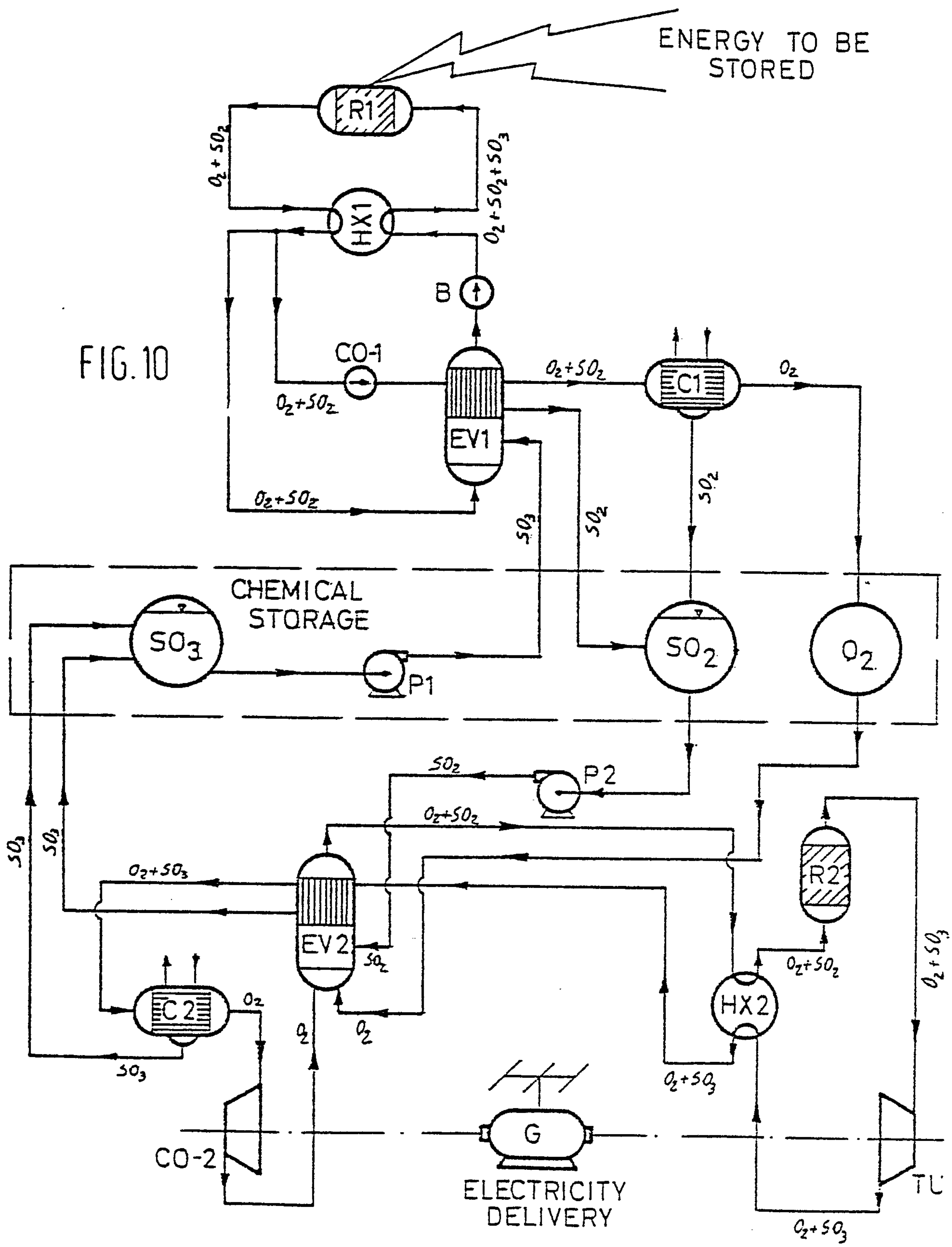
ENERGY TO BE STORED
R1
$O_2+SO_2$
$O_2+SO_2+SO_3$
HX1
B
CO-1
EV1
C1
$O_2$
$SO_2$
$SO_3$
CHEMICAL STORAGE
$SO_3$
P1
$SO_2$
$O_2$
P2
R2
EV2
$O_2+SO_3$
C2
HX2
CO-2
G
ELECTRICITY DELIVERY
TU

European Patent Office

# EUROPEAN SEARCH REPORT

0158744
Application number

EP 84 20 0546

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | CHEMICAL ABSTRACTS, vol. 90, no. 8, February 19, 1979, page 184, no. 57912m, Columbus, Ohio, US; J. DAYAN et al.: "A new power cycle that combines power generation with energy storage" & PROC. INTERSOC. ENERGY CONVERS. ENG. CONF. 1978, 13(1), 285-91<br>* Whole abstract *<br>--- | 1 | C 01 B 17/74<br>C 09 K 5/00 |
| X | CHEMICAL ABSTRACTS, vol. 99, no. 12, September 19, 1983, page 170, no. 91062e, Columbus, Ohio, US; ABU LEIYEH, OTHMAN: "Thermochemical energy storage with sulfur oxides" & BER. KERNFORSCHUNGSANLAGE JUELICH 1983, JUEL-1847, 161 pp.<br>* Whole abstract *<br>----- | 1 | |
| | | | **TECHNICAL FIELDS SEARCHED (Int. Cl.4)** |
| | | | C 01 B 17/74<br>C 09 K 5/00 |

The present search report has been drawn up for all claims

| Place of search | Date of completion of the search | Examiner |
|---|---|---|
| THE HAGUE | 21-12-1984 | VAN BELLINGEN I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document